# EUROPÄISCHE PATENTSCHRIFT

(11) **EP 1 745 949 B1**
(45) Veröffentlichungstag und Bekanntmachung des Hinweises auf die Patenterteilung: **02.09.2009**
(21) Anmeldenummer: 06014819.4
(22) Anmeldetag: 17.07.2006
(51) Int. Cl.: B60D 1/06

(54) **Anhängerkupplung mit Einrastsicherung**
Trailer coupling with safety locking mechanism
Attelage de remorque avec dispositif de sécurité de verrouillage

(30) Priorität: 18.07.2005 DE 202005011444 U
(43) Veröffentlichungstag der Anmeldung: 24.01.2007
(73) Patentinhaber: AL-KO KOBER AG, 89359 Kötz (DE)
(72) Erfinder: Bestler, Wolfgang, 89343 Jettingen-Scheppach (DE)
(74) Vertreter: Ernicke, Klaus Stefan

(56) Entgegenhaltungen:
- EP-A- 1 138 529
- DE-A1- 1 680 031
- DE-C1- 3 824 028
- DE-C1- 10 209 866
- GB-A- 2 339 180
- US-A- 4 817 979

## Beschreibung

Die Erfindung betrifft eine Anhängerkupplung für Fahrzeuganhänger mit den Merkmalen im Oberbegriff des Hauptanspruchs.

Eine solche Anhängerkupplung ist aus der US 4,817,979 A bekannt. Die Anhängerkupplung weist ein Kupplungsgehäuse mit einer Aufnahmeöffnung für einen Kugelkopf und einen Schließmechanismus mit einem kugelschalenförmigen Spannelement für den Kugelkopf auf, der von einem zwischen einer Öffnungs- und einer Schließstellung schwenkbaren Bedienhebel beaufschlagt wird. Die Anhängerkupplung besitzt ferner eine Einrastsicherung, welche die korrekte Einrastposition der Anhängerkupplung auf dem Kugelkopf signalisiert und eine Sperreinrichtung aufweist, die auf den Bedienhebel einwirkt. Die Sperreinrichtung besitzt einen in die Aufnahmeöffnung ragenden plattenförmigen Auslöser, der bei korrekter Einrastposition vom Kugelkopf weggedrückt wird. Die Sperreinrichtung und der Auslöser wirken auf das kugelschalenförmige Spannelement ein und geben dieses in der korrekten Einrastposition frei.

Die DE 94 12 514 U1 zeigt eine andere Anhängerkupplung. Sie besitzt ein Kupplungsgehäuse mit einer Aufnahmeöffnung für einen Kugelkopf und einen zwischen einer Öffnungs- und einer Schließstellung hin und her schwenkbaren Bedienhebel mit einem Schließmechanismus zum Zuspannen der Anhängerkupplung am Kugelkopf. Die vorbekannte Anhängerkupplung besitzt ferner eine Einrastsicherung für die korrekte Einrastposition der Anhängerkupplung auf dem Kugelkopf. Die Einrastsicherung ist als Anzeigestift ausgebildet, der in die Aufnahmeöffnung des Kupplungsgehäuses ragt und der vom eingetauchten Kugelkopf nach außen in eine Anzeigeposition gedrückt wird. Diese Einrastanzeige muss vom Bediener beobachtet werden, was nicht immer geschieht. Der Bedienhebel ist unabhängig von der Einrastanzeige und kann in die Schließstellung gebracht werden, auch wenn die Anhängerkupplung nur lose auf der Kupplungskugel aufsitzt und nicht die korrekte Einrastposition einnimmt.

Es ist Aufgabe der vorliegenden Erfindung, eine verbesserte Anhängerkupplung aufzuzeigen.

Die Erfindung löst diese Aufgabe mit den Merkmalen im Hauptanspruch.
Die Einrastsicherung mit der auf das Bedienerorgan einwirkenden Sperreinrichtung hat den Vorteil, dass sie dem Bediener unmissverständlich eine Fehlbedienung signalisiert und die gewohnte Schließbewegung des Bedienorgans, vorzugsweise eines schwenkbaren Bedienhebels, verhindert, wenn die Anhängerkupplung sich nicht in der korrekten Einrastposition auf dem Kugelkopf befindet. Bei der beanspruchten Anhängerkupplung kann das Bedienorgan selbst als Einrastanzeige fungieren und dem Benutzer das korrekte Ankuppeln am Zugfahrzeug signalisieren. Auch einem ungeübten Bediener der Anhängerkupplung fällt es sofort auf, wenn das Bedienorgan sich nicht in die Schließstellung bringen lässt. Ein vermeintliches Schließen der Anhängerkupplung trotz nicht eingenommener Einrastposition wird dadurch vermieden.

Ferner ist es möglich, dass die Sperreinrichtung das Bedienorgan in allen anderen Positionen oder Zuständen der Anhängerkupplung außerhalb der korrekten Einrastposition blockiert. Ein z.B. schwenkbarer Bedienhebel kann dadurch erst dann gedreht werden, wenn der Kugelkopf in die Aufnahmeöffnung der Anhängerkupplung eintaucht und die Sperreinrichtung löst. Bei abgekuppeltem Anhänger lässt sich der Bedienhebel hingegen nicht verschwenken.

Die Einrastanzeige ist außerdem in Verbindung mit einer Wegfahrsicherung unter Einsatz eines Kugelkopfadapters nützlich. Wenn dieser an Stelle des normalen Kugelkopfes in die Aufnahmeöffnung eingeführt wird, lassen sich das Bedienorgan und die Einrastsicherung wie beim normalen Ankuppeln benutzen und haben die gleichen Sicherheitsaspekte. Nur bei einem korrekt eingeführten Adapter und bei Einnahme der Einrastposition lässt sich das Bedienorgan in der gewohnten Weise betätigen.

Die beanspruchte Einrastsicherung hat eine hohe Betriebssicherheit und ist gegen Fehlbedienungen und Fehlfunktionen gesichert. Die Sperrwirkung ist gegen Manipulationen geschützt. Sie ist auch gegen Umgebungseinflüsse abgesichert und kann z.B. durch Schräglagen oder Erschütterungen des Anhängers nicht versehentlich gelöst werden. Die beweglichen Teile der Sperreinrichtung, insbesondere der Schwenkhebel und die Rasteinrichtung, können zur Maximierung der Betriebssicherheit definierte Betriebsstellungen und Zwangsführungen haben, die Fehlstellungen und Fehlfunktionen vermeiden. Günstig für die sichere Funktion der Rasteinrichtung sind definierte Raststellungen und eine direkte Feder- und Kraftverbindung zwischen der Sperreinrichtung und dem Bedienhebel.

Der Sperrhebel steht unter Federvorspannung und lässt sich nur mit einem erhöhten Kraftaufwand bewegen, der in der Regel erst beim Ankuppeln oder beim Einführen eines Kugelkopfadapters gegeben ist. Manipulationen mit anderen Gegenständen führen nicht zu einer Hebelbewegung. Der vorzugsweise als kleine Tastnase ausgebildete Auslöser kommt durch seine geringe Größe und Formgebung dieser Manipulationssicherheit entgegen. Außerdem lässt er sich bei korrekter Einrastposition störungsfrei in einem kleinen Freiraum am Kupplungsgehäuse unterbringen. Der Auslöser befindet sich im oberen Bereich der Aufnahmeöffnung und kann dadurch erst dann vom Kugelkopf betätigt werden, wenn dieser bereits so weit in die Aufnahmeöffnung eingetaucht ist, dass in dieser Stellung bei freigegebener Betätigung des Bedienorgans auch ein korrektes Ankuppeln gewährleistet ist.

Die Einrastsicherung kann durch ihre Federbelastung außerdem die Betätigung des Bedienorgangs erleichtern und eine automatische Schließung bei einem korrekt eintauchenden Kugelkopf unterstützen. Zudem kann die Einrastsicherung mit einem Schloss zum Absperren der Anhängerkupplung kombiniert werden. Das Schloss lässt sich sowohl zum Sichern des angekuppelten Anhängers, als auch der Wegfahrsicherung und des Kugelkopfadapters benutzen. Auch eine Verschleißanzeige kann in vorteilhafter Weise mit der Einrastsicherung kombiniert werden.

Die Einrastsicherung erfordert wenig Bauaufwand und lässt sich für unterschiedlichste Konstruktionen von Anhängerkupplungen einsetzen. Sie kann auch an vorhandenen Anhängerkupplungen nachgerüstet werden. Die Einrastsicherung ist kostengünstig und bringt bei geringem finanziellen Einsatz einen großen Sicherheitsgewinn.

In den Unteransprüchen sind weitere vorteilhafte Ausgestaltungen der Erfindung angebeben.

Die Erfindung ist in den Zeichnungen beispielsweise und schematisch dargestellt. Im einzelnen zeigen:
- Figur 1:: einen Fahrzeuganhänger mit einer Anhängerkupplung und einer Einrastsicherung in Seitenansicht,
- Figur 2:: eine abgebrochene und vergrößerte Seitenansicht einer Anhängerkupplung mit einer Einrastsicherung in Schließstellung,
- Figur 3:: eine teilweise geschnittene und vergrößert dargestellte Anhängerkupplung mit Einrastsicherung in einer Auslieferungsstellung,
- Figur 4 und 5:: geschnittene Seitenansichten der Anhängerkupplung von Figur 3 in Öffnungs- und Schließstellung,
- Figur 6:: einen Querschnitt durch die Anhängerkupplung gemäß Schnittlinie VI-VI von Figur 3,
- Figur 7:: eine Seitenansicht der Anhängerkupplung mit einem Schloss,
- Figur 8:: einen Querschnitt durch die Anhängerkupplung gemäß Schnittlinie VIII-VIII von Figur 7, und
- Figur 9 - 14:: Varianten von Anhängerkupplungen und Einrastsicherungen.

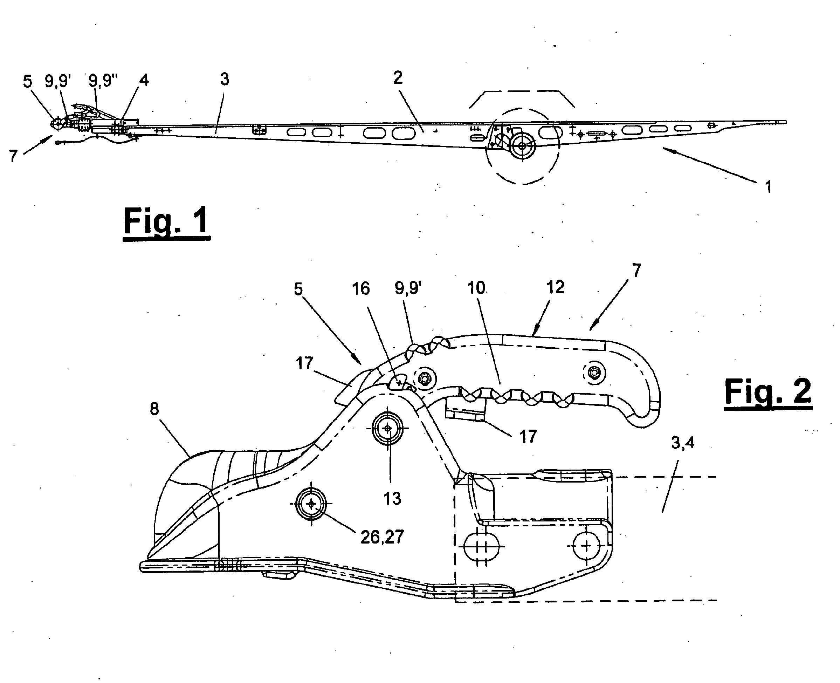

Figur 1 zeigt einen Fahrzeuganhänger (1) in einer beispielhaften Seitenansicht. Er besitzt ein Fahrgestell (2) mit einer Deichsel (3), an deren Kopf eine Anhängerkupplung (5) mit einer Einrastsicherung (7) angeordnet ist. Der Fahrzeuganhänger (1) kann eine Bremseinrichtung, z.B. eine Auflaufbremse (4), aufweisen. Die Anhängerkupplung (5) ist je nach technischer Ausgestaltung des Fahrzeuganhängers (1) mit ihrem Kupplungsgehäuse (8) an der Deichsel (3) oder an der Schubstange der Auflaufbremse (4) befestigt. Die konstruktive Ausgestaltung des Fahrzeuganhängers (1) und seiner Bauteile ist beliebig wählbar.

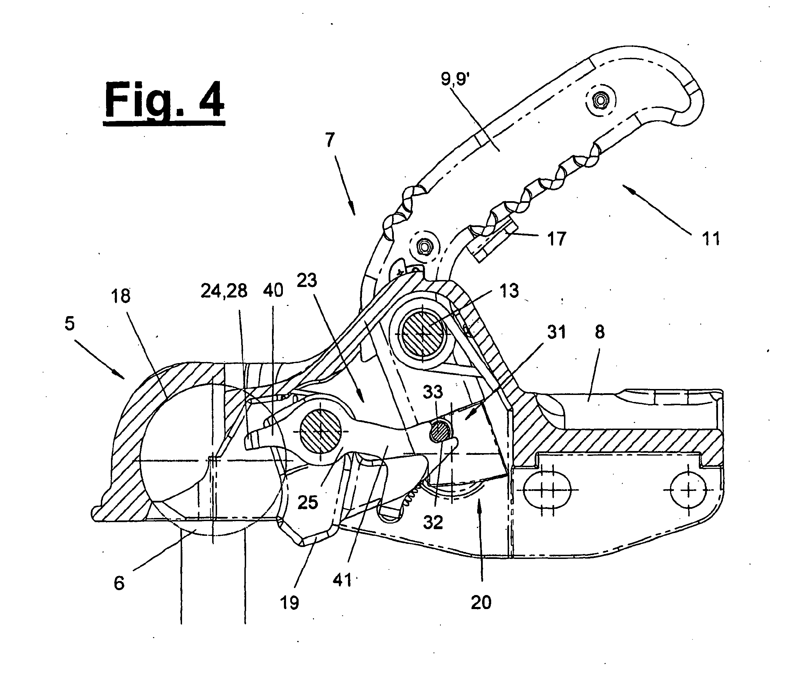

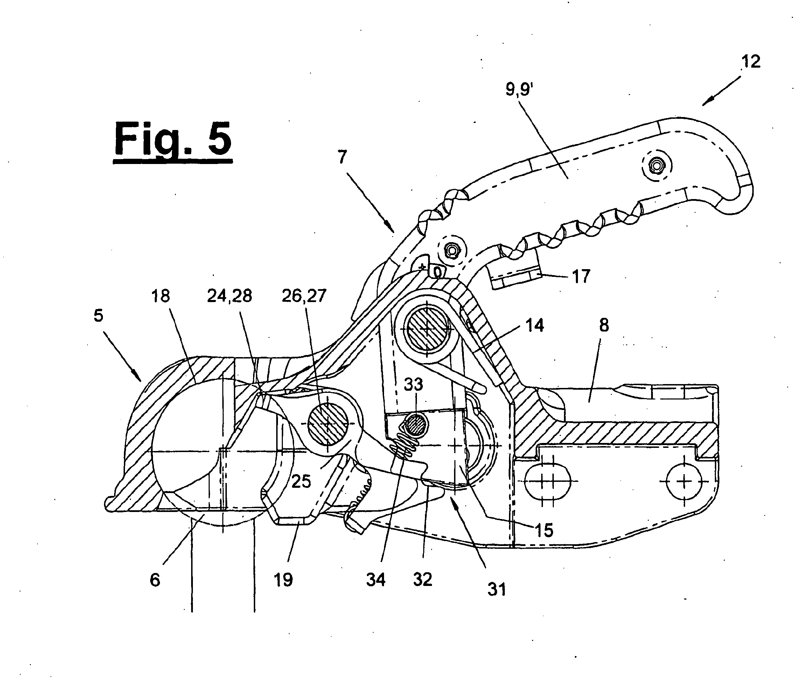

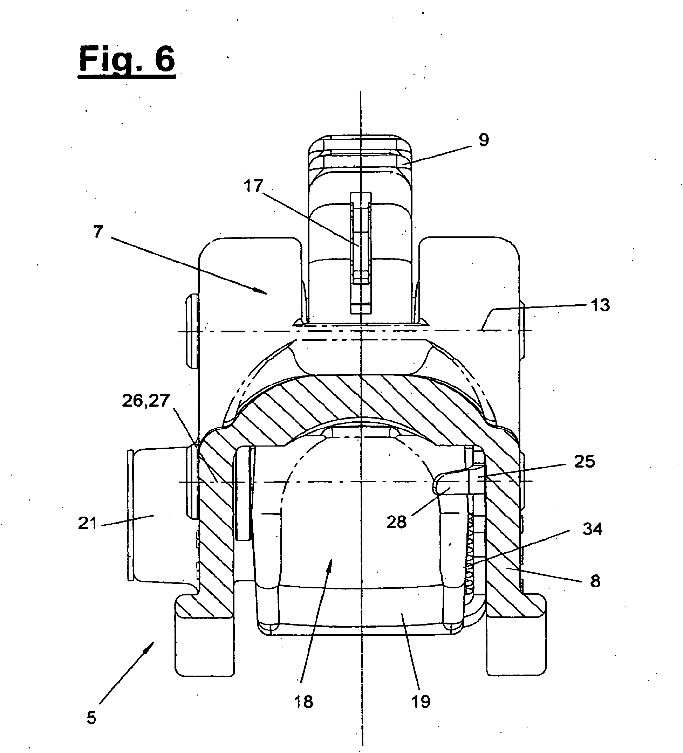

Figur 2 zeigt die Anhängerkupplung (5) in Seitenansicht. In Figur 6 ist der zugehörige Querschnitt dargestellt. Die Anhängerkupplung (5) besteht aus dem besagten Kupplungsgehäuse (8), an dem mindestens ein Bedienorgan (9) beweglich gelagert ist. Das Kupplungsgehäuse (8) hat einen im wesentlichen U-förmigen und nach unten offenen Querschnitt. Es weist im vorderen Bereich eine von unten her zugängliche Aufnahmeöffnung (18) für eine Kugelkopf (6) auf, der an der Zugeinrichtung eines nicht dargestellten Zugfahrzeugs angebracht ist. Anstelle des Kugelkopfes (6) kann auch ein Kugelkopfadapter eingeführt werden. Die Aufnahmeöffnung (18) ist an die Kugelkopfkontur angepasst und umschließt den Kugelkopf (6) an der Oberseite und am größten Teil des seitlichen Umfangs. Im Kupplungsgehäuse (8) ist ferner ein bewegliches und z.B. um ein Lager (26) schwenkbares Spannelement (19) angeordnet, das zwischen einer Öffnungs- und Schließstellung hin und her bewegt werden kann und das in Schließstellung den Kugelkopf (6) oder den Kugelkopfadapter in der Aufnahmeöffnung (18) einspannt. Figur 5 verdeutlicht diese Schließ- oder Ankuppelstellung, während Figur 4 die Öffnungsstellung zum Ankuppeln zeigt.

Das Spannelement (19) ist getrennt vom Bedienorgan (9) angeordnet und ist eigenständig beweglich gelagert (26). Es ist z.B. als Kugelschale (19) ausgebildet, die seitlich an den Kugelkopf (6) zugestellt und angepresst werden kann. Das Spannelement (19) wird vom Bedienorgan (9) über einen Schließmechanismus (20) betätigt. Alternativ kann das Spannelement (19) in anderer Weise konstruktiv ausgebildet sein und eine andere Lagerung, z.B. ein Schiebelager, aufweisen.

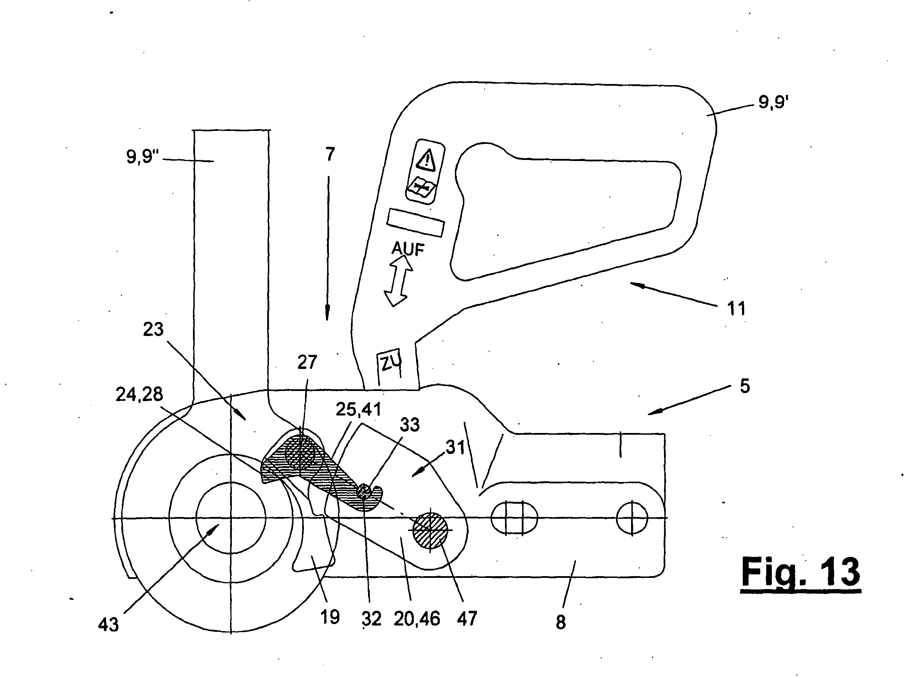

Das Bedienorgan (9) kann in unterschiedlicher Weise ausgebildet sein. In den gezeigten Varianten handelt es sich um schwenkbare Bedienhebel. In den Ausführungsbeispielen von Figur 2 bis 12 ist ein einzelnes Bedienorgan (9) vorhanden, welches als Kupplungshebel (9') ausgebildet und um ein gehäusefestes Hebellager (13) schwenkbar gelagert ist. Der Kupplungshebel (9') betätigt in der vorerwähnten Weise den Schließmechanismus (20). Er öffnet sowie schließt die Anhängerkupplung (5). Im Ausführungsbeispiel von Figur 13 sind zwei Bedienorgane (9) vorhanden, die als Kupplungshebel (9') und als schwenkbarer Spannhebel (9") ausgebildet sind. Der Spannhebel (9") dient zum Betätigen einer zusätzlichen Reibkupplung (43).

Der Kupplungshebel (9') besitzt ein nach außen ragendes Griffteil (10), an dem auch eine Verriegelung (17) angeordnet sein kann. Der Kupplungshebel (9') kann in der in Figur 4 und 5 gezeigten Weise zwischen einer Öffnungsstellung (11) und einer Schließstellung (12) hin und her geschwenkt werden. Die Verriegelung (17) hält den Kupplungshebel (9') in der Schließstellung (12) fest und verhindert ein unerwünschtes Öffnen des Kupplungshebels (9') und der Anhängerkupplung (5). Die Verrieglung (17) kann z.B. aus einer am Kupplungsgehäuse (8) angreifenden Sperrnase und einem kleinen Taster an der Griffunterseite bestehen.

Der Schließmechanismus (20) zum Öffnen und Schließen der Anhängerkupplung (5) kann in unterschiedlicher Weise ausgebildet sein. In der gezeigten Ausführungsform hat der Kupplungshebel (9') unterhalb des Hebellagers (13) und im Gehäuseinneren einen Hebelfortsatz (15) mit einer Anlaufkurve, die auf die entsprechend kurvenförmig gestaltete Rückseite des federbelasteten Spannelements (19) drückt. Über die Schwenkbewegung des Kupplungshebel (9') wird das Spannelement (19) auf und zu geschwenkt. Alternativ kann es in Verbindung mit einem Schiebelager vor und zurück geschoben werden. Der Kupplungshebel (9') kann ebenfalls unter der Last einer am Hebellager (13) montierten Feder (14) stehen.

Die Anhängerkupplung (5) besitzt eine Einrastsicherung (7) mit einer Sperreinrichtung (23), die mittelbar oder unmittelbar auf mindestens ein Bedienorgan (9) einwirkt und die einen Auslöser (24) aufweist, der in oder an der Aufnahmeöffnung (18) angeordnet ist und vom Kugelkopf (6) oder einem Kugelkopfadapter bei korrekter Einrastposition der Anhängerkupplung (5) betätigt wird. In der gezeigten Ausführungsform von Figur 2 bis 5 wirkt die Sperreinrichtung (23) unmittelbar auf den Kupplungshebel (9') und insbesondere auf den unteren Hebelfortsatz (15) ein. In der Variante von Figur 13 kann die Sperreinrichtung (23) unmittelbar auf den Spannhebel (9") einwirken.

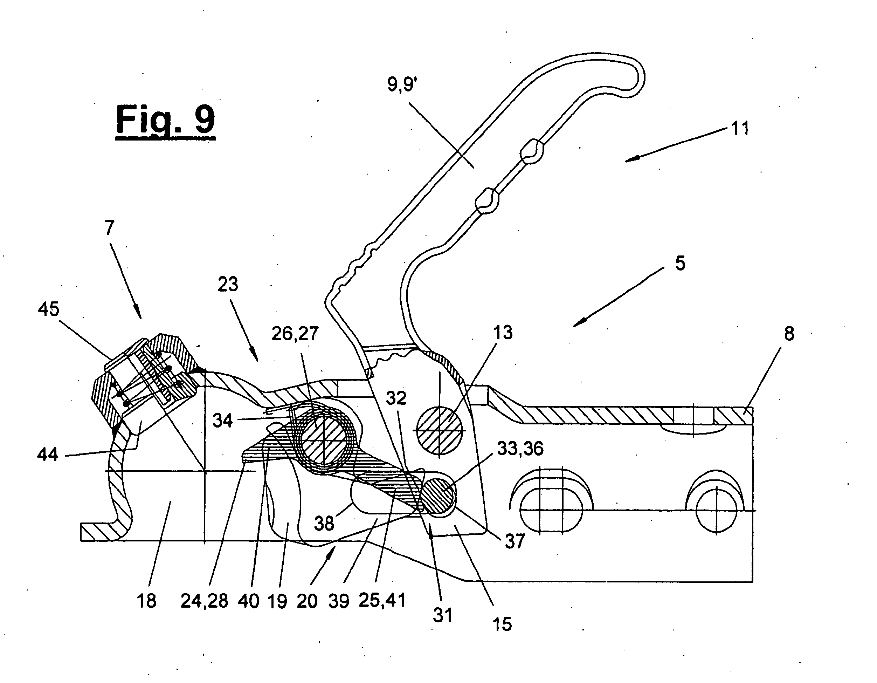

Alternativ kann die Sperreinrichtung (23) auf das Spannelement (19) und/oder den Schließmechanismus (20) gemäß der nachfolgend erläuterten Figuren 9 bis 13 einwirken. Dies führt zu einem mittelbaren Einwirken auf das Bedienorgan (9), wenn dessen Bewegungen an die Bewegungen des Spannelements (19), z.B. der Kugelschale, und/oder des Schließmechanismus (20) gekoppelt sind.

Der Schließmechanismus (20) kann außerdem anders als in der gezeigten Ausführungsform ausgebildet sein und Zwischenglieder wie Schlepphebel oder dergleichen aufweisen. Der Kupplungshebel (9') greift dann über diese Zwischenglieder am Spannelement (19), insbesondere der Kugelschale an.

Das von der Sperreinrichtung (23) beeinflusste Bedienorgan (9) bildet eine Anzeige der Einrastsicherung (7) und signalisiert dem Bediener sicher und unmissverständlich die Einnahme der korrekten Einrastposition der Anhängerkupplung (5) auf dem Kugelkopf (6). Hierbei erlaubt die Sperreinrichtung (23) dem Bedienorgan (9) nur dann die Einnahme der in Figur 5 gezeigten Schließstellung (12), wenn die vorerwähnte korrekte Einrastposition gegeben ist. Anderenfalls verhindert sie eine Bewegung des Bedienorgans (9) in diese Schließstellung (12). Bei fehlerhafter Kupplungsbedienung, wenn z.B. die Anhängerkupplung (5) nur lose auf den Kugelkopf (6) aufgesetzt ist und dieser nicht in der gewünschten Weise in die Aufnahmeöffnung (18) eintaucht, sperrt die Einrastsicherung (7) die besagte Schließstellung (12). Wenn das Bedienorgan (9) sich beim Ankuppeln nicht in die gewohnte Schließstellung (12) bewegen lässt, signalisiert dies dem Bediener eindeutig eine Fehlfunktion beim Ankuppeln. Diese Funktion des Bedienorgans (9) kann in beiden Ausführungsvarianten als Kupplungshebel (9') und als Spannhebel (9") gegeben sein.

In den gezeigten und bevorzugten Ausführungsformen hat die Sperreinrichtung (23) noch eine Zusatzwirkung. Sie blockiert nämlich das Bedienorgan (9), insbesondere den Kupplungshebel (9'), bei Nichteinnahme der Einrastposition. Dies ist der Fall bei einer offenen Anhängerkupplung (5) und bei einem nicht vorhandenen oder nicht genügend weit eingetauchten Kugelkopf (6) oder Kugelkopfadapter. Solange der Auslöser (24) nicht betätigt wird und die Sperreinrichtung (23) löst, blockiert diese die Schwenkbewegungen des Kupplungshebels (9'). Diese starre Hebellage ist ebenfalls für den Bediener ein unmissverständliches Signal für eine geöffnete oder nicht korrekt geschlossene Anhängerkupplung (5).

Die Sperreinrichtung (23) hat eine Rasteinrichtung (31), die im gezeigten Ausführungsbeispiel formschlüssig am Bedienorgan (9) angreift. Die Rasteinrichtung (31) kann Rastelemente (32,33) aufweisen, die unter Federbelastung formschlüssig zusammenwirken und definierte Rast- und Betriebsstellungen bieten. Der Angriff der Rasteinrichtung (31) kann am Kupplungshebel (9') und/oder am Spannhebel (9") erfolgen. Dies korreliert mit dem direkten Einwirken der Sperreinrichtung (23) auf das Bedienorgan (9). Bei einem mittelbaren Einwirken kann die Rasteinrichtung (31) am Schließmechanismus (20) bzw. an der Kugelschale (19) angreifen. Mit der formschlüssigen Rasteinrichtung (31) werden beide vorgenannten Funktionen mit dem Sperren oder Freigeben der Schließstellung (12) des Bedienorgans (9) bei korrekter Einrastposition und der Blockade des Bedienorgans (9) bei Nichteinnahme der Einrastposition verwirklicht.

In der gezeigten Ausführungsform von Figur 2 bis 8 weist die Sperreinrichtung (23) einen im wesentlichen gestreckten Schwenkhebel (25) auf, der als Sperrhebel wirkt und etwa im mittleren Bereich um ein gehäusefestes Lager (27) drehbar gelagert ist und zwei beidseits abstehende Hebelarme (40,41) aufweist. Das Spannelement (19) kann gleichachsig um dasselbe oder ein eigenes Lager (26) schwenkbar sein, so dass beide Teile (19,25) z.B. nebeneinander auf einem gemeinsamen Lagerbolzen sitzen. Der Schwenkhebel (25) ist seitlich neben dem kugelschalenförmige Spannelement (19) angeordnet und greift an diesem vorbei. An seinem vorderen Hebelarm (40) ist der Schwenkhebel (25) mit dem Auslöser (24) versehen.

Dies ist in der gezeigten Ausführungsform eine am Hebelarmende vorstehende und ggf. seitlich nach innen abgewinkelte Tastnase (28), die ggf. in ihrem Kontaktbereich an die Kontur des Kugelkopfes (6) zu dessen Schonung angepasst und entsprechend gewölbt sein kann. Die Tastnase (28) ragt in den oberen Bereich der Aufnahmeöffnung (18) und wird vom eintauchenden Kugelkopf (6) oder Kugelkopfadapter unter Drehung des Schwenkhebels (25) mitgenommen. Sie befindet sich bei geöffneter Anhängerkupplung (5) oberhalb des Kugelmittelpunktes. Figur 4 zeigt diese Anordnung. Das Kupplungsgehäuse (8) besitzt im Bereich der Aufnahmeöffnung (18) einen Freiraum für die Aufnahme der Tastnase (28) in der Einrastposition. Figur 5 deutet diese Anordnung an.

Der Schwenkhebel (25) weist ein Rückstellorgan (34) auf, welches den Schwenkhebel (25) und die Tastnase (28) in die in Figur 4 gezeigte Öffnungsstellung drängt. Das Rückstellorgan (34) ist vorzugsweise als Feder ausgebildet. Die Feder (34) kann gehäusefest abgestützt sein. In der Ausführungsform von Figur 2 bis 8 ist sie mit dem Bedienorgan (9) verbunden.

Die vorerwähnte Rasteinrichtung (31) weist als Rastelemente z.B. eine Rastöffnung (32) und einen hier formschlüssig eingreifenden und in der Form angepassten Raststift (33) auf. In der Ausführungsform von Figur 2 bis 8 ist die Rastöffnung (32) endseitig am hinteren Hebelarm (41) des Schwenkhebels (25) angeordnet, wobei sich der Raststift (33) am Kupplungshebel (9') und dessen unteren Hebelfortsatz (15) befindet. Die Anordnung kann auch umgekehrt sein.

Figur 4 zeigt die Öffnungsstellung (11) der Anhängerkupplung (5) und des Kupplungshebels (9'). In dieser Öffnungsstellung ist die Rasteinrichtung (31) geschlossen, wobei der Raststift (33) in der Rastöffnung (32) gehalten und abgestützt ist. Der Schwenkhebel (25) und der Kupplungshebel (9') drehen sich um verschiedene distanzierte Achsen (13,27). In der gezeigten Öffnungsstellung (11) blockieren sie sich über die Rasteinrichtung (31) gegenseitig. Der Schwenkhebel (25) nimmt eine Stützstellung ein, in der er mit seiner Rastöffnung (32) tangential zur Bewegungskurve des Raststifts (33) um das Hebellager (13) ausgerichtet ist und die einwirkende Hebelkraft im Schwenklager (27) drehsteif abstützt. Der Rasteingriff wird durch die Feder (34) unterstützt und gesichert, die mit dem einen Ende am hebelfesten Raststift (33) und mit dem anderen Ende an einem seitlichen Fortsatz des Hebelarms (41) und einem Federanschluss (35) eingehängt ist. Dies ist die vorerwähnte Blockadestellung des Bedienhebels (9) bei nicht eingenommener Einrastposition. Durch die Feder (34) sind damit auch das Bedienorgan (9) und die Sperreinrichtung (23), insbesondere der Schwenkhebel (25), federnd verbunden.

Beim Ankuppeln taucht der Kugelkopf (6) in die ebenfalls kugelförmige Aufnahmeöffnung (18) ein und betätigt gegen Ende der Eintauchbewegung den Auslöser (24) bzw. die Tastnase (28). Durch diesen Kugelkopfkontakt wird der Schwenkhebel (24) in der gezeigten Ausführungsform von Figur 4 und 5 im Uhrzeigersinn gedreht, wodurch die Rasteinrichtung (31) gegen die Kraft der Feder (34) geöffnet wird und der Raststift (33) freikommt. Hierdurch wird der Kupplungshebel (9') freigegeben und kann in die Schließstellung (12) geschwenkt werden. Diese Schwenkbewegung wird einerseits durch die am Kupplungsgehäuse (8) abgestützte Feder (14) und andererseits durch die am Schwenkhebel (25) angreifende Feder (34) unterstützt. Hierdurch ist zum Schließen der Anhängerkupplung (5) nur eine geringe Handkraft erforderlich. Wenn die Anhängerkupplung (5) auf den Kugelkopf (6) richtig aufgesetzt wird, schließt sie sich beim Absenken von selbst und spannt den Kugelkopf (6) ein.

Zum Abkuppeln wird die ggf. vorhandene Verriegelung (17) gelöst und der Kupplungshebel (9') in die Öffnungsstellung (11) geschwenkt. Sobald die Anhängerkupplung (5) vom Kugelkopf (6) abgehoben wird, kehrt der Schwenkhebel (25) unter Einwirkung der Feder (34) in die in Figur 4 gezeigte Öffnungsstellung zurück, wobei automatisch die Rasteinrichtung (31) wieder geschlossen wird. Der Schwenkhebel (25) kann an der Oberseite des hinteren Hebelarms (41) eine Anlenkkurve (29) mit einem endseitigen Höcker (30) aufweisen, an der ggf. der Raststift (33) bei der Hebelbewegung unter Federwirkung in Kontakt gehalten und entlang bewegt wird. Unter Wirkung der Feder (34) schnappt am Ende der Raststift (33) automatisch in die Rastöffnung (32). Im Kupplungsgehäuse (18) können Endanschläge (nicht dargestellt) für die ein- oder beidseitige Begrenzung der Schwenkbewegungen des Schwenkhebels (25) vorhanden sein. Das Bedienorgan (9), die Sperreinrichtung (23) und die Rasteinrichtung (31) haben zur Optimierung der Betriebssicherheit definierte Betriebsstellungen und gegenseitige Zwangsführungen, die Fehlstellungen und Fehlfunktionen vermeiden.

Figur 4 und 5 zeigen die erwähnten Betriebsstellungen der Anhängerkupplung (5) und der Einrastsicherung (7) in den Öffnungs- und Schließstellungen (11,12). Die beschriebenen Funktionen können auch in Verbindung mit einer Wegfahrsicherung genutzt werden, welche das unbefugte Ankuppeln und Wegfahren des Fahrzeuganhängers (1) verhindert. Für solche Fälle wird ein Kugelkopfadapter in die Aufnahmeöffnung (18) eingesetzt. Der Kugelkopfadapter (nicht dargestellt) ist ähnlich wie der Kugelkopf (6) ausgebildet und besteht aus einem Kugelteil und einem Griff. Beim Einführen des Kugelkopfadapters wird der Auslöser (24) in der vorbeschriebenen Weise betätigt, wodurch die Sperreinrichtung (23) und die Einrastsicherung (7) entriegelt werden und ein Zuspannen der Anhängerkupplung (5) am Kugelkopfadapter erlauben.

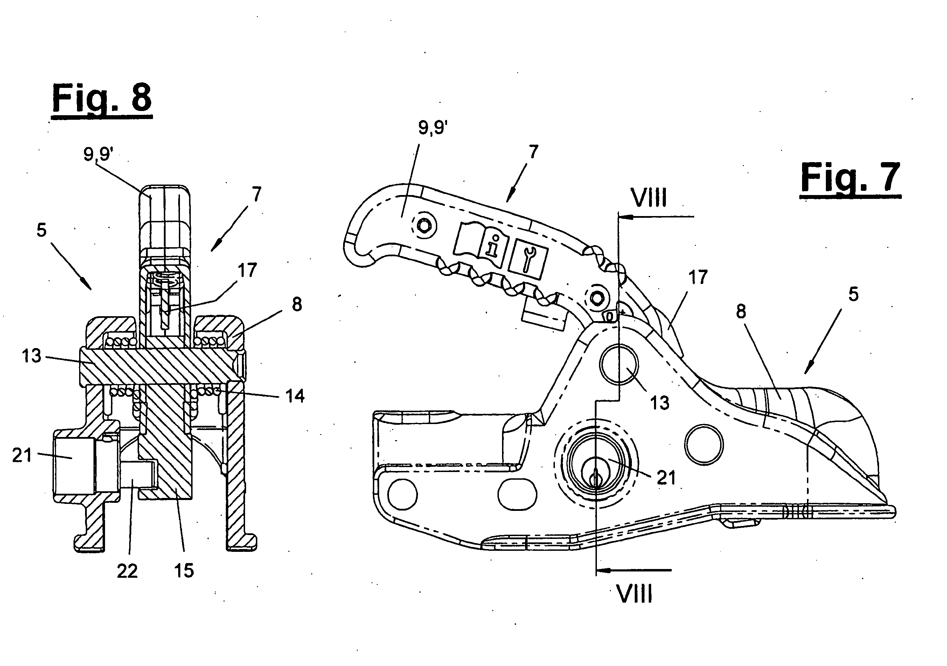

Zur Sicherung der Schließstellung (12) kann an der Anhängerkupplung (5) ein Schloss (21) angebracht werden. Dies kann ein in Figur 7 und 8 dargestelltes Steckschloss sein, welches in eine entsprechende seitliche Aufnahme am Kupplungsgehäuse (8) lösbar oder fest eingesteckt und montiert werden kann. Das Schloss (21) besitzt einen Riegel (22), der bei Schlossbetätigung ausgefahren oder ausgeschwenkt wird und in eine Öffnung am Bedienorgan (9), insbesondere am Hebelfortsatz (15) des Kupplungshebels (9') formschlüssig eingreift und die Schwenkbewegung des Bedienorgans (9) sperrt. Das Schloss (21) kann mit einem Schlüssel betätigt werden. Alternativ ist ein Zahlenschloss oder dergl. möglich.

Die Anhängerkupplung (5) kann eine Verschleißanzeige (16) aufweisen. Dies ist z.B. eine seitlich am Kupplungshebel (9') angebrachte Skala, die je nach Schwenkstellung vom Rand des Kupplungsgehäuses (8) mehr oder weniger weit bedeckt ist. Je größer der Abrieb und Verschleiß an der Kontaktfläche der Kugelschale (19) oder auch der Aufnahmeöffnung (18) ist, desto weiter kann der Kupplungshebel (9') in die Schließstellung (12) nach unten geschwenkt werden. Dieser vergrößerte Schwenkweg wird über die Verschleißanzeige (16) signalisiert.

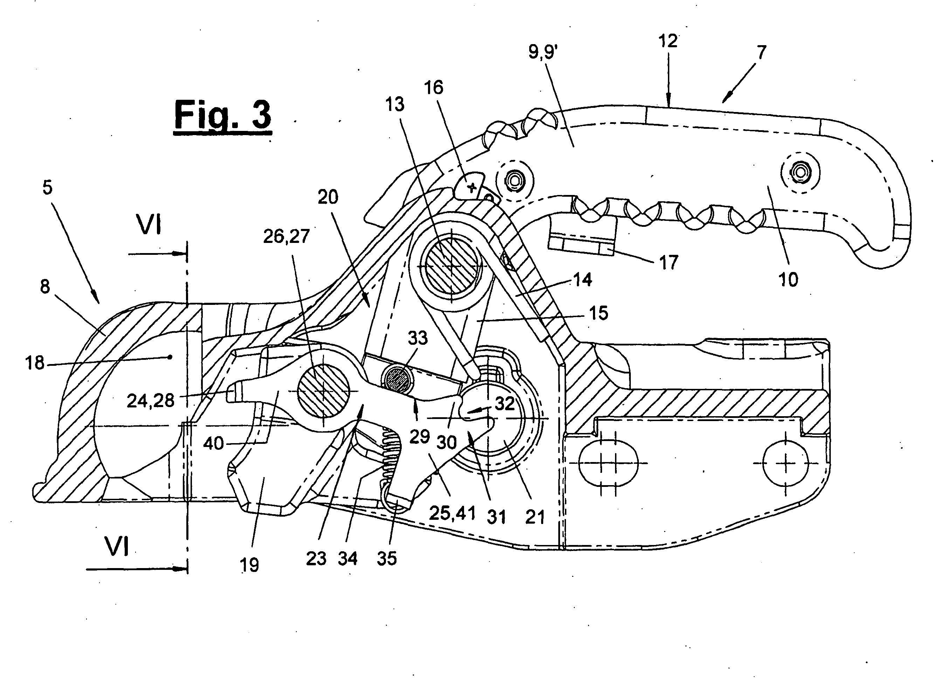

Figur 3 verdeutlicht eine Zwischenstellung der Anhängerkupplung (5) und der Einrastsicherung (7) im Auslieferungszustand und vor der ersten Ingebrauchnahme. In diesem Fall ist die Rasteinrichtung (31) geöffnet, wobei der Schwenkhebel (25) und seine Tastnase (28) sich in der Öffnungsstellung befinden. Der Raststift (33) liegt an der Oberseite und der dortigen Anlenkkurve (29) des Schwenkhebels (25) an. Der Raststift (33) und der Federanschluss (35) befinden sich hierbei in einer im wesentlichen vertikalen Lage übereinander, so dass die Feder (34) den Kontakt des Raststifts (33) an der Anlenkkurve (29) sichert. Der Kupplungshebel (9') nimmt die abgeschwenkte Schließstellung (12) ein und wird in dieser Lage durch die Federn (14,34) gehalten. Für die erste Ingebrauchnahme der Anhängerkupplung (5) wird der Kupplungshebel (9') in die in Figur 4 gezeigte Öffnungsstellung (11) geschwenkt, wodurch der an der Anlenkkurve (29) und dem Höcker (30) entlanggleitende Taststift (33) automatisch in die Rastöffnung (32) schnappt und die Rasteinrichtung (31) die gezeigte Schließstellung einnimmt. Die Anhängerkupplung (5) und die Einrastsicherung (7) sind nun fertig für den vorerwähnten Betrieb.

Figur 9 bis 13 zeigen Varianten der Einrastsicherung (7) und der Anhängerkupplung (5). Die Teile der Sperreinrichtung (23) sind der besseren Übersichtlichkeit wegen schraffiert dargestellt.

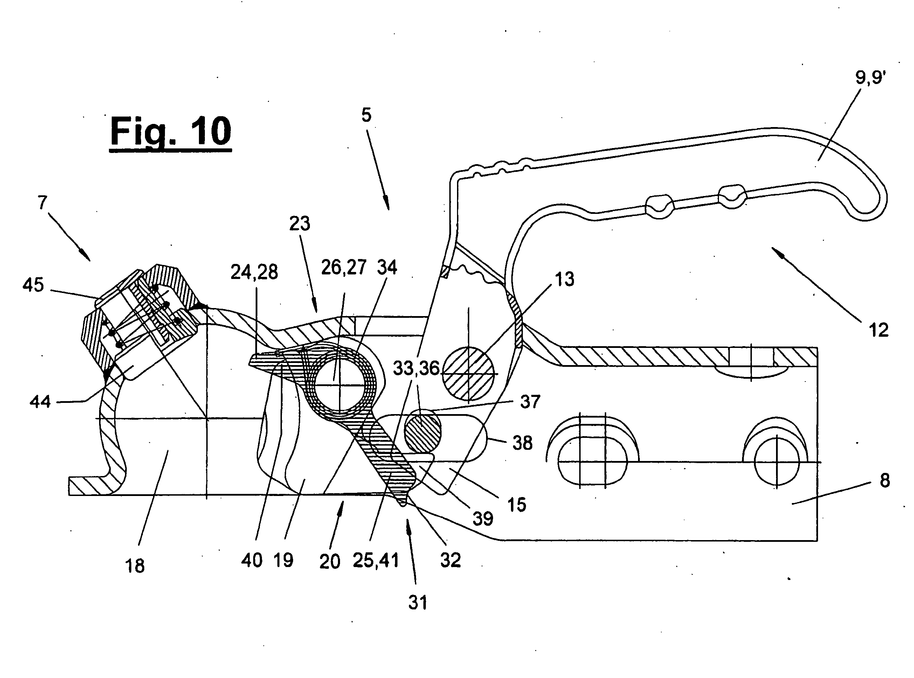

Figur 9 zeigt eine erste Variante der Anhängerkupplung (5) und der Einrastsicherung (7) in Öffnungsstellung (11). Figur 10 zeigt hierzu die Schließstellung (12). Die Sperreinrichtung (23) hat auch hier einen gleichachsig mit dem kugelschalenförmigen Spannelement (19) schwenkbar gelagerten (26,27) Schwenkhebel (25), der am vorderen Hebelarm (40) den Auslöser (24) bzw. eine Tastnase (28) der vorbeschriebenen Art trägt. Am gestreckten hinteren Hebelarm (41) befindet sich am stirnseitigen Ende eine Rastöffnung (32). Das Rückstellorgan (34) ist als Torsionsfeder auf dem Schwenklager (27) ausgebildet. Der Raststift (33) wird in dieser Ausführungsform von einem Schiebebolzen (36) gebildet. In der Öffnungsstellung (11) ist die Rasteinrichtung (31) im formschlüssig sperrenden Eingriff, wobei der Schiebebolzen (36) in die Rastöffnung (32) greift.

Das Spannelement (19) besitzt bei dieser Ausführung einen rückseitig vorspringenden Fortsatz (39), der mit dem Schiebebolzen (36) bzw. dem Raststift (33) zusammenwirkt. Der Schiebebolzen (36) ist über eine Führung (38), z.B. beidseitig horizontale Führungsschlitze, im Gehäuse (8) beweglich geführt. Der Schiebebolzen (36) durchsetzt den Hebelfortsatz (15) des Kupplungshebels (9'), welcher hierfür eine schräge Langlochführung (37) zum Ausgleich des Bolzenhöhenversatzes bei der Schwenkbewegung um die Hebelachse (13) aufweist.

Die Schwenkbewegung des Kupplungshebels (9') wird über den Schiebebolzen (36) auf die Kugelschale (19) geleitet. Der Fortsatz (39) besitzt zu diesem Zweck eine schräge Stirnseite, die am Schiebebolzen (36) in Öffnungsstellung (11) anliegt und bei einer Schließbewegung des Kupplungshebels (9') am Schiebebolzen (36) unter Drehung des Spannelements (19) entlang gleitet. In der Schließstellung (12) gemäß Figur 10 befindet sich der Schiebebolzen (36) über dem Fortsatz (39) und verhindert durch den formschlüssigen Angriff ein Öffnen und Zurückdrehen der Kugelschale (19) um das Lager (26).

In der Öffnungsstellung (11) blockiert die Sperreinrichtung (23) die Schließbewegung des Kupplungshebels (9'), wobei der tangential zur Hebelbewegung angreifende hintere Hebelarm (41) über die formschlüssiggeschlossene Rasteinrichtung (31) eine Abstützung bewirkt. Erst wenn der Kugelkopf korrekt in die Aufnahmeöffnung (18) eintaucht und die Tastnase (28) unter Hebeldrehung mitnimmt, wird die Rasteinrichtung (31) geöffnet und der Kupplungshebel (9') kann unter Mitnahme des Schiebebolzens (36) in die Schließstellung (12) geschwenkt werden. Beim Öffnen der Anhängerkupplung (5) wird der Schwenkhebel (25) unter Einwirkung der Feder (34) wieder in die Rasteingriffsstellung zurückgedreht.

Bei dieser Ausführungsform wirkt die Sperreinrichtung (23) auf die Schließmechanik (20), welche im beschriebenen Ausführungsbeispiel vom Spannelement (19) und dem Schiebebolzen (36) gebildet wird.

Im Ausführungsbeispiel von Figur 9 und 10 ist außerdem eine Ergänzung der Einrastsicherung (7) mit einer Einrastanzeige (45) dargestellt. Am Gehäuse (8) ist im Bereich der Aufnahmeöffnung (18) mindestens ein Reibbolzen (44) angeordnet, der durch die Gehäusewandung und einen Aufsatz nach außen ragt und der in Radialrichtung zum Zentrum der kugelförmigen Aufnahmeöffnung (18) gegen Federkraft beweglich gelagert ist. Wenn der Kugelkopf korrekt eintaucht, schiebt er den Reibbolzen (44) nach außen, der dadurch aus dem Gehäuse (8) bzw. dem Aufsatz herausragt und durch diese Stellung, ggf. mit Unterstützung einer Signalfarbe, ebenfalls die korrekte Einraststellung signalisiert. Die Ausgestaltung dieser Einrastanzeige bzw. des Anzeigestifts kann ähnlich wie in der DE 94 12 514 U1 ausgebildet sein.

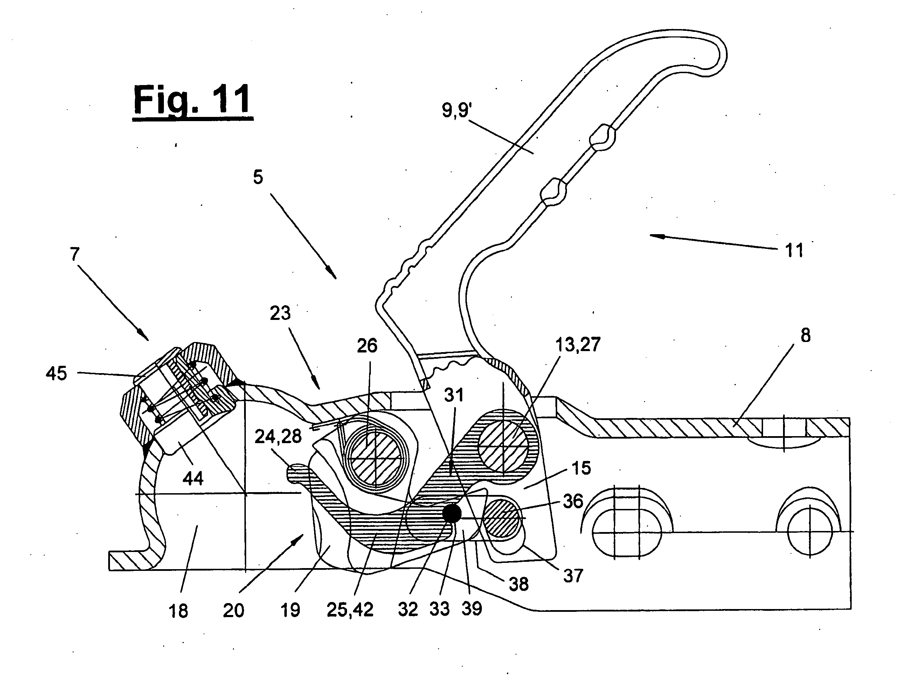

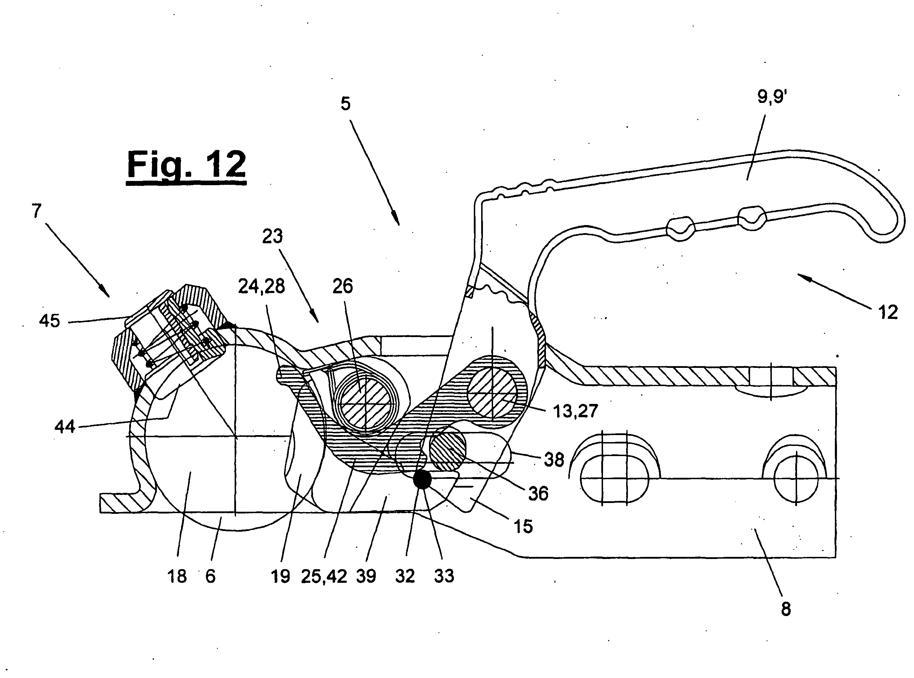

Figur 11 und 12 zeigen eine weitere Variante der Einrastsicherung (7), wobei der Schließmechanismus (20) der gleiche ist wie im vorbeschriebenen Ausführungsbeispiel von Figur 9 und 10. In der Variante von Figur 11 und 12 wirkt der Sperrhebel (25) über eine Rasteinrichtung (31) mit dem Spannelement (19) zusammen und hat damit eine mittelbare Wirkung auf den Kupplungshebel (9'). Der Schwenkhebel (25) besteht hier aus einem einteiligen abgewinkelten Hebelarm (42), der am rückseitigen Ende um ein gestellfestes Lager (27) schwenkbar gelagert ist und der am vorderen Ende den Auslöser (24) bzw. eine Tastnase (28) trägt. Der Schwenkhebel (25) kann achsgleich mit dem Kupplungshebel (9') auf einem gemeinsamen Lager (13,27) angeordnet sein.

Der Hebelarm (42) untergreift das Lager (26) des kugelschalenförmigen Spannelements (19) mit Abstand und Bewegungsspielraum. Der Schwenkhebel (25) hat am unteren Rand eine Rastöffnung (32), die mit einem Raststift (33) zusammenwirkt, der bei dieser Ausführungsform am Spannelement (19) und vorzugsweise an dessen Fortsatz (39) angeordnet ist. Der in der Öffnungsstellung (11) der Anhängerkupplung (5) bestehende Rasteingriff verhindert eine Schwenkbewegung des Spannelements (19). Diese Blockade wirkt auf den Kupplungshebel (9') über die Schließmechanik (20) und den Schiebebolzen (36) zurück. In korrekter Einraststellung gemäß Figur 12 drückt der Kugelkopf (6) den Auslöser (24) nach oben, wobei der Schwenkhebel (25) in der Bilddarstellung in Uhrzeigerrichtung nach oben schwenkt und den Raststift (33) freigibt. Die Schließmechanik (20) kann dann in der vorbeschriebenen Weise funktionieren. Figur 12 zeigt die Schließstellung (12) des Kupplungshebels (9'). Beim erneuten Öffnen der Anhängerkupplung (5) wird der Schwenkhebel (25) durch ein nicht dargestelltes Rückhalteorgan zurückgedreht und die Rasteinrichtung (31) wieder geschlossen.

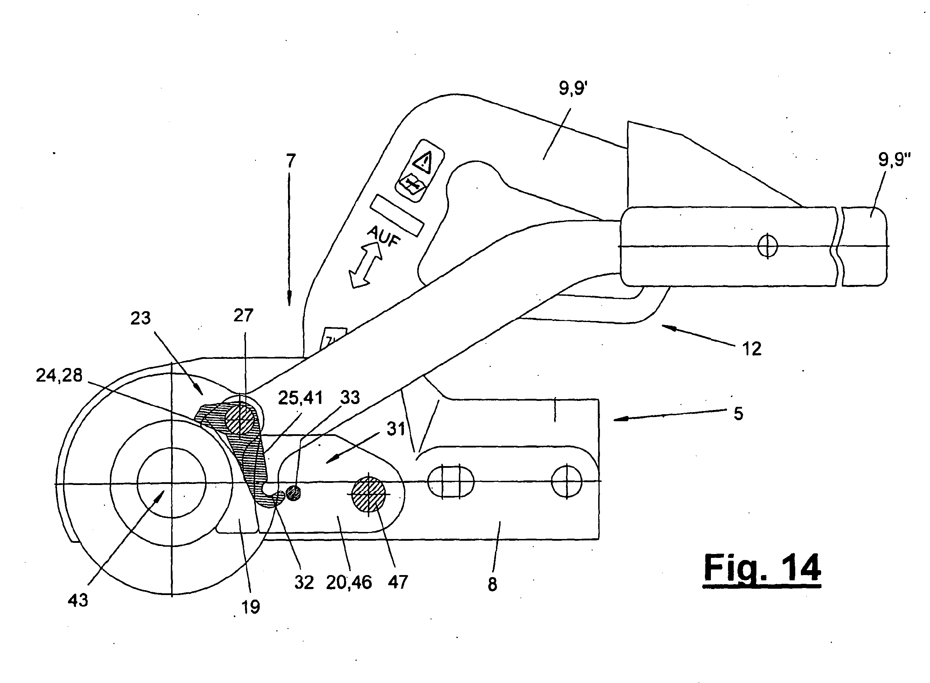

Figur 13 und 14 verdeutlichen eine Variante der Anhängerkupplung (5) und der Einrastsicherung (7), wie sie auch in Figur 1 angedeutet ist. Die Anhängerkupplung (5) kann in diesem Fall eine zusätzliche Reibkupplung (43) mit dem zugehörigen Spannhebel (9'') aufweisen. Die Kupplungsgestaltung kann entsprechend der EP 0 687 583 B1 sein. Mit dem ein- oder zweiarmigen Spannhebel (9'') wird die Reibkupplung (43) mit den seitlichen Reibstößeln mit einer Drehung um die durch den Kugelkopfmittelpunkt verlaufende Querachse geöffnet und geschlossen. Die Reibstößel (nicht dargestellt) werden hierbei seitlich zugestellt und an den Kugelkopf (6) angedrückt. Mit dem Kupplungshebel (9') wird der Schließmechanismus (20) betätigt und die Anhängerkupplung (5) geöffnet und geschlossen. Figur 13 zeigt die Öffnungsstellung mit dem abgebrochen dargestellten Spannhebel (9''). In der in Figur 14 gezeigten Schließstellung kann der Spannhebel (9'') den Kupplungshebel (9') formschlüssig übergreifen und mit einer Querstange oder dergleichen in der gezeigten Schließstellung (12) festhalten.

Bei der in Figur 13 und 14 gezeigten Ausführungsform gibt es verschiedene Möglichkeiten für die Ausgestaltung und Funktion der Sperreinrichtung (23). In der gezeigten Variante wirkt der zweiarmige Schwenkhebel (25) auf den Schließmechanismus (20) ein. Letzterer kann z.B. eine mit dem Kupplungshebel (9') verbundene Klinke (46) aufweisen, die um ein eigenes gestellfestes Lager (47) schwenkbar ist. Die Klinke (46) wirkt bei einer Drehbewegung ihrerseits auf das kugelschalenförmige Spannelement (19) ein und dreht dieses zwischen einer Öffnungs- und einer Schließstellung. Die Rasteinrichtung (31) besteht in dieser Variante aus einer am Ende des zweiten Hebelarms (41) angeordneten tiefen Rastöffnung (32), welche den an der Klinke (46) befindlichen Raststift (33) in der Öffnungsstellung (11) der Anhängerkupplung (5) formschlüssig und spielarm untergreift und blockiert. Die Zapfen bzw. Stifte (27,33,47) liegen dabei in einer Linie. Die Klinke (46) und der Schwenkhebel (25) drehen entgegengesetzt, so dass bei einer versuchten Klinkendrehung in die Schließstellung der Raststift (33) sich in der tiefen Rastöffnung (32) und an der vorspringenden Nase am Ende des hinteren Hebelarms (41) fängt. Hierdurch ist auch der Kupplungshebel (9') mittelbar beaufschlagt und blockiert. In der korrekten Einrastposition gemäß Figur 14 dreht der Kugelkopf den Schwenkhebel (25), wodurch die Rasteinrichtung (31) geöffnet wird und die Klinke (46) unter Schließwirkung auf das Spannelement (19) abgeschwenkt werden kann. Über ein nicht dargestelltes Rückhalteorgan wird beim Öffnen der Anhängerkupplung (5) der Schwenkhebel (25) wieder in den Rasteingriff gebracht.

In einer alternativen Ausführungsform kann die Sperreinrichtung (23) auch auf den Spannhebel (9'') einwirken und diesem die Einnahme der Schließstellung erst bei korrekter Einrastposition des Kugelkopfes (6) in der Aufnahmeöffnung (18) erlauben. In diesem Fall wirkt der Spannhebel (9'') als Einrastanzeige.

Abwandlungen der gezeigten und beschriebenen Ausführungsformen sind in verschiedener Weise möglich. Dies betrifft einerseits die Ausgestaltung der Sperreinrichtung (23) und ihres Auslösers (24). Anstelle des Schwenkhebels (25) kann ein anderes Übertragungsorgan, z.B. ein verschiebbar gelagerter Stößel oder dergl., für die Sperreinrichtung (23) verwendet werden. Die vorbeschriebene Blockadefunktion bei Nichteinnahme der korrekten Einrastposition ist entbehrlich. In diesem Fall kann die Rasteinrichtung (31) entfallen oder anders ausgebildet sein. Die Sperreinrichtung (23) ist dann so ausgebildet, dass sie Bewegungen des Bedienorgans (9) um die Öffnungsstellung (11) herum ermöglicht, wobei sie die Einnahme der Schließstellung (12) aber so lange sperrt, bis über den Auslöser (24) eine Entriegelung erfolgt.

Variabel ist auch die Ausbildung und Anordnung der Rasteinrichtung (31) und ihrer formschlüssigen Rastelemente (32,33). Die Zuordnung der Rastelemente (32,33) zur Sperreinrichtung (23) und zum Bedienorgan (9) oder zum Schließmechanismus (20) kann vertauscht sein.

Ferner können der Schließmechanismus (20) und das Spannelement (19) konstruktiv abgewandelt werden. Anstelle der schwenkbaren Kugelschale (19) kann ein anderes Klemm- oder Spannelement Verwendung finden, welches ggf. eine andere Form hat und z.B. eine lineare Bewegung ausführt. Zudem können mehrere solcher Spannelemente vorhanden sein.

Die Anhängerkupplung (5) kann im weiteren zusätzliche Reibbremsen zum Dämpfen von Schlingerbewegungen des Fahrzeuganhängers (1) aufweisen. Außerdem kann das Schloss (21) statt am Bedienorgan (9) an der Kugelschale (19) oder am Schließmechanismus (20) oder auch an der Sperreinrichtung (23), speziell am Schwenkhebel (25), angreifen. Das Bedienorgan (9) kann statt als Schwenkhebel als Zuggriff, als Schubeinrichtung oder dergl. ausgestaltet sein. Die Ausführungsformen sind beliebig wählbar, wobei die konstruktive Ausbildung und Anordnung der Einrastsicherung (7) und ihrer Sperreinrichtung (23) sowie deren Komponenten entsprechend angepasst sind. Die Anhängerkupplung (5) mit dem Bedienorgan (9) und der Kupplungsmechanik können auch z.B. entsprechend der EP 0 695 654 B1 ausgebildet sein.

### BEZUGSZEICHENLISTE

- 1: Fahrzeuganhänger
- 2: Fahrgestell
- 3: Deichsel
- 4: Auflaufbremse
- 5: Anhängerkupplung
- 6: Zugkopf, Kugelkopf
- 7: Einrastsicherung
- 8: Kupplungsgehäuse
- 9: Bedienorgan, Bedienhebel
- 9': Kupplungshebel
- 9": Spannhebel
- 10: Griffteil
- 11: Öffnungsstellung
- 12: Schließstellung
- 13: Hebellager, Hebelachse
- 14: Feder
- 15: Hebelfortsatz
- 16: Verschleißanzeige
- 17: Verriegelung
- 18: Aufnahmeöffnung, Kugelaufnahme
- 19: Spannelement, Kugelschale
- 20: Schließmechanismus
- 21: Schloss
- 22: Riegel
- 23: Sperreinrichtung
- 24: Auslöser
- 25: Schwenkhebel
- 26: Lager Kugelschale, Achse
- 27: Lager Schwenkhebel, Achse
- 28: Tastnase
- 29: Anlenkkurve
- 30: Höcker, Anstieg
- 31: Rasteinrichtung
- 32: Rastelement, Rastöffnung
- 33: Rastelement, Raststift
- 34: Rückstellorgan, Feder
- 35: Federanschluss
- 36: Schiebebolzen
- 37: Langlochführung
- 38: Führung, Führungsschlitz
- 39: Fortsatz
- 40: Hebelarm
- 41: Hebelarm
- 42: Hebelarm
- 43: Reibkupplung
- 44: Reibbolzen
- 45: Anzeige
- 46: Klinke
- 47: Lager

## Patentansprüche

1. Anhängerkupplung für Fahrzeuganhänger (1), wobei die Anhängerkupplung (5) ein Kupplungsgehäuse (8) mit einer Aufnahmeöffnung (18) für einen Kugelkopf (6), mindestens ein zwischen einer Öffnungs- und einer Schließstellung (11,12) bewegliches Bedienorgan (9), einen Schließmechanismus (20), ein kugelschalenförmiges Spannelement (19) für den Kugelkopf (6) und eine Einrastsicherung (7) für die korrekte Einrastposition der Anhängerkupplung (5) auf dem Kugelkopf (6) aufweist, wobei die Einrastsicherung (7) eine auf das Bedienorgan (9) einwirkende Sperreinrichtung (23) mit einem in der Aufnahmeöffnung (18) angeordneten und vom Kugelkopf (6) bei korrekter Einrastposition der Anhängerkupplung (5) betätigbaren Auslöser (24) aufweist, **dadurch gekennzeichnet, dass** die Sperreinrichtung (23) auf das Bedienorgan (9) mittelbar oder unmittelbar einwirkt und einen Schwenkhebel (25) mit einer den Auslöser (24) bildenden und in den oberen Bereich der Aufnahmeöffnung (18) ragenden Tastnase (28) aufweist, wobei der Schwenkhebel (25) seitlich neben dem kugelschalenförmige Spannelement (19) angeordnet ist und an diesem vorbeigreift.

2. Anhängerkupplung nach Anspruch 1, **dadurch gekennzeichnet, dass** das Bedienorgan (9) als von der Sperreinrichtung (23) betätigbare Anzeige der Einrastsicherung (7) ausgebildet ist, wobei die Sperreinrichtung (23) in Abhängigkeit von der Einrastposition die Schließstellung (12) des Bedienorgans (9) sperrt oder freigibt.

3. Anhängerkupplung nach Anspruch 1 oder 2, **dadurch gekennzeichnet, dass** die Sperreinrichtung (23) das Bedienorgan (9) bei Nichteinnahme der Einrastposition blockiert.

4. Anhängerkupplung nach Anspruch 1, 2 oder 3, **dadurch gekennzeichnet, dass** der Schließmechanismus (20) ein auf den Kugelkopf (6) in der Schließstellung einwirkendes Spannelement (19) aufweist, welches getrennt vom Bedienorgan (9) angeordnet und gelagert ist.

5. Anhängerkupplung nach einem der vorhergehenden Ansprüche, **dadurch gekennzeichnet, dass** die Sperreinrichtung (23) eine formschlüssig am Bedienorgan (9) und/oder am Schließmechanismus (20) angreifende Rasteinrichtung (31) aufweist.

6. Anhängerkupplung nach nach Anspruch 5, **dadurch gekennzeichnet, dass** die Rasteinrichtung (31) formschlüssig und unter Federbelastung zusammenwirkende Rastelemente (32,33) aufweist.

7. Anhängerkupplung nach Anspruch 5 oder 6, **dadurch gekennzeichnet, dass** die Sperreinrichtung (23) den Schwenkhebel (25) mit mit der Rasteinrichtung (31) aufweist.

8. Anhängerkupplung nach einem der vorhergehenden Ansprüche, **dadurch gekennzeichnet, dass** die Tastnase (28) im Kontaktbereich an die Kontur des Kugelkopfs (6) angepasst ist.

9. Anhängerkupplung nach einem der vorhergehenden Ansprüche, **dadurch gekennzeichnet, dass** das Kupplungsgehäuse (8) an der Aufnahmeöffnung (18) einen Freiraum für die Tastnase (28) in Einrastposition aufweist.

10. Anhängerkupplung nach einem der vorhergehenden Ansprüche, **dadurch gekennzeichnet, dass** der Schwenkhebel (25) um ein stationäres Lager (26) im Kupplungsgehäuse (8) schwenkbar gelagert ist.

11. Anhängerkupplung nach einem der vorhergehenden Ansprüche, **dadurch gekennzeichnet, dass** der Schwenkhebel (25) ein Rückstellorgan (34), vorzugsweise eine Feder, aufweist.

12. Anhängerkupplung nach Anspruch 11, **dadurch gekennzeichnet, dass** das Rückstellorgan (34) mit dem Bedienorgan (9) verbunden ist.

13. Anhängerkupplung nach einem der vorhergehenden Ansprüche, **dadurch gekennzeichnet, dass** der Schwenkhebel (25) gleichachsig mit der Kugelschale (19) des Schließmechanismus (20) angeordnet ist.

14. Anhängerkupplung nach einem der Ansprüche 5 bis 13, **dadurch gekennzeichnet, dass** die Rasteinrichtung (31) eine Rastöffnung (32) am Schwenkhebel (25) und einen Raststift (33) am Bedienorgan (9) aufweist.

15. Anhängerkupplung nach Anspruch 14, **dadurch gekennzeichnet, dass** die Rastöffnung (32) am rückwärtigen Hebelende angeordnet ist.

16. Anhängerkupplung nach einem der vorhergehenden Ansprüche, **dadurch gekennzeichnet, dass** der Schwenkhebel (25) für den Raststift (33) an einer Seite eine Anlenkkurve (29) mit einem Höcker (30) vor der Rastöffnung (32) aufweist.

17. Anhängerkupplung nach einem der Ansprüche 11 bis 16, **dadurch gekennzeichnet, dass** das Rückstellorgan (34) mit dem Raststift (33) des Bedienorgans (9) verbunden ist.

18. Anhängerkupplung nach einem der Ansprüche 1 bis 13, **dadurch gekennzeichnet, dass** die Rasteinrichtung (31) eine Rastöffnung (32) am Schwenkhebel (25) und einen Raststift (33) an der Schließmechanik (20) aufweist.

19. Anhängerkupplung nach Anspruch 18, **dadurch gekennzeichnet, dass** die Schließmechanik (20) einen im Kupplungsgehäuse (8) beweglich geführten (38) und mit dem Bedienorgan (9) verbundenen Schiebebolzen (36) aufweist, welcher den Raststift (33) bildet.

20. Anhängerkupplung nach Anspruch 18, **dadurch gekennzeichnet, dass** die Schließmechanik (20) eine im Kupplungsgehäuse (8) beweglich gelagerte (47) und mit dem Bedienorgan (9) verbundene Klinke (46) aufweist, an welcher der Raststift (33) angeordnet ist.

21. Anhängerkupplung nach einem der vorhergehenden Ansprüche, **dadurch gekennzeichnet, dass** das Bedienorgan (9) als ein schwenkbar im Kupplungsgehäuse (8) gelagerter (13) Bedienhebel ausgebildet ist.

22. Anhängerkupplung nach einem der vorhergehenden Ansprüche, **dadurch gekennzeichnet, dass** das Bedienorgan (9) eine bei der Bedienung zu betätigende Verriegelung (17) aufweist.

23. Anhängerkupplung nach einem der vorhergehenden Ansprüche, **dadurch gekennzeichnet, dass** das Bedienorgan (9) eine Verschleißanzeige (16) aufweist.

24. Anhängerkupplung nach einem der vorhergehenden Ansprüche, **dadurch gekennzeichnet, dass** das Bedienorgan (9) als ein auf den Schließmechanismus (20) einwirkender Kupplungshebel (9') ausgebildet ist.

25. Anhängerkupplung nach einem der Ansprüche 1 bis 20, **dadurch gekennzeichnet, dass** das Bedienorgan (9) als ein auf eine Reibkupplung (43) einwirkender Spannhebel (9") ausgebildet ist.

26. Anhängerkupplung nach einem der vorhergehenden Ansprüche, **dadurch gekennzeichnet, dass** die Anhängerkupplung (5) ein Schloss (21) mit einem an der Sperreinrichtung (23), am Schließmechanismus (20) oder am Bedienorgan (9) angreifenden Riegel (22) aufweist.

27. Anhängerkupplung nach Anspruch 26, **dadurch gekennzeichnet, dass** das Schloss (21) an der Seitenwand des Kupplungsgehäuses (8) angeordnet ist.

## Claims

1. Trailer coupling for vehicle trailers (1), wherein the trailer coupling (5) has a coupling housing (8) with a receiving opening (18) for a ball head (6), at least one operating member (9) which is movable between an opening and a closing position (11, 12), a closing mechanism (20), a ball-socket-shaped clamping element (19) for the ball head (6) and a safety locking mechanism (7) for the correct locking position of the trailer coupling (5) on the ball head (6), wherein the safety locking mechanism (7) has a blocking device (23) which acts on the operating member (9) and has a release mechanism (24) which is arranged in the receiving opening (18) and can be actuated by the ball head (6) in the correct locking position of the trailer coupling (5), **characterized in that** the blocking device (23) acts indirectly or directly on the operating member (9) and has a pivot lever (25) with a fingertip lug (28) which forms the release mechanism (24) and projects into the upper region of the receiving opening (18), the pivot lever (25) being arranged laterally next to the ball-socket-shaped clamping element (19) and reaching past the latter.

2. Trailer coupling according to Claim 1, **characterized in that** the operating member (9) is designed as an indicator of the safety locking mechanism (7), which indicator can be actuated by the blocking device (23), the blocking device (23) blocking or releasing the closing position (12) of the operating member (9) as a function of the locking position.

3. Trailer coupling according to Claim 1 or 2, **characterized in that** the blocking device (23) blocks the operating member (9) when the latter does not take up the locking position.

4. Trailer coupling according to Claim 1, 2 or 3, **characterized in that** the closing mechanism (20) has a clamping element (19) which acts on the ball head (6) in the closing position and is arranged and mounted separately from the operating member (9).

5. Trailer coupling according to one of the preceding claims, **characterized in that** the blocking device (23) has a locking device (31) acting in an interlocking manner on the operating member (9) and/or on the closing mechanism (20).

6. Trailer coupling according to Claim 5, **characterized in that** the locking device (31) has locking elements (32, 33) interacting in an interlocking manner and under spring loading.

7. Trailer coupling according to Claim 5 or 6, **characterized in that** the blocking device (23) has the pivot lever (25) with the locking device (31).

8. Trailer coupling according to one of the preceding claims, **characterized in that** the fingertip lug (28) is matched in the contact region to the contour of the ball head (6).

9. Trailer coupling according to one of the preceding claims, **characterized in that** the coupling housing (8) has a clearance at the receiving opening (18) for the fingertip lug (28) in the locking position.

10. Trailer coupling according to one of the preceding claims, **characterized in that** the pivot lever (25) is mounted pivotably about a stationary bearing (26) in the coupling housing (8).

11. Trailer coupling according to one of the preceding claims, **characterized in that** the pivot lever (25) has a resetting member (34), preferably a spring.

12. Trailer coupling according to Claim 11, **characterized in that** the resetting member (34) is connected to the operating member (9).

13. Trailer coupling according to one of the preceding claims, **characterized in that** the pivot lever (25) is arranged coaxially with the ball socket (19) of the closing mechanism (20).

14. Trailer coupling according to one of Claims 5 to 13, **characterized in that** the latching device (31) has a latching opening (32) on the pivot lever (25) and a latching pin (33) on the operating member (9).

15. Trailer coupling according to Claim 14, **characterized in that** the latching opening (32) is arranged at the rear end of the lever.

16. Trailer coupling according to one of the preceding claims, **characterized in that** the pivot lever (25) has an articulation curve (29) on one side for the locking pin (33) with a hump (30) before the locking opening (32).

17. Trailer coupling according to one of Claims 11 to 16, **characterized in that** the resetting member (34) is connected to the locking pin (33) of the operating member (9).

18. Trailer coupling according to one of Claims 1 to 13, **characterized in that** the locking device (31) has a locking opening (32) on the pivot lever (25) and a locking pin (33) on the closing mechanism (20).

19. Trailer coupling according to Claim 18, **characterized in that** the closing mechanism (20) has a slide bolt (36) which is guided movably (38) in the coupling housing (8), is connected to the operating member (9) and forms the locking pin (33).

20. Trailer coupling according to Claim 18, **characterized in that** the closing mechanism (20) has a catch (46) which is mounted movably (47) in the coupling housing (8), is connected to the operating member (9) and on which the locking pin (33) is arranged.

21. Trailer coupling according to one of the preceding claims, **characterized in that** the operating member (9) is designed as an operating lever mounted pivotably (13) in the coupling housing (8).

22. Trailer coupling according to one of the preceding claims, **characterized in that** the operating member (9) has an interlocking mechanism (17) which is to be actuated during the operation.

23. Trailer coupling according to one of the preceding claims, **characterized in that** the operating member (9) has a wear indicator (16).

24. Trailer coupling according to one of the preceding claims, **characterized in that** the operating member (9) is designed as a coupling lever (9') acting on the closing mechanism (20).

25. Trailer coupling according to one of Claims 1 to 20, **characterized in that** the operating member (9) is designed as a clamping lever (9") acting on a friction coupling (43).

26. Trailer coupling according to one of the preceding claims, **characterized in that** the trailer coupling (5) has a lock (21) with a bolt (22) acting on the blocking device (23), on the closing mechanism (20) or on the operating member (9).

27. Trailer coupling according to Claim 26, **characterized in that** the lock (21) is arranged on the side wall of the coupling housing (8).

## Revendications

1. Accouplement d'attelage pour remorque de véhicule (1), l'accouplement d'attelage (5) présentant un boîtier d'accouplement (8) muni d'une ouverture d'accueil (18) pour une tête sphérique (6), au moins un organe de commande (9) mobile entre une position d'ouverture et une position de fermeture (11, 12), un mécanisme de fermeture (20), un élément de serrage (19) en forme de coque sphérique pour la tête sphérique (6) et une sécurité d'enclenchement (7) pour la position d'enclenchement correcte de l'accouplement d'attelage (5) sur la tête sphérique (6), la sécurité d'enclenchement (7) présentant un dispositif de blocage (23) qui agit sur l'organe de commande (9) avec un déclencheur (24) disposé dans l'ouverture d'accueil (18) et pouvant être actionné par la tête sphérique (6) lorsque l'accouplement d'attelage (5) se trouve dans la position d'enclenchement correcte, **caractérisé en ce que** le dispositif de blocage (23) agit directement ou indirectement sur l'organe de commande (9) et présente un levier pivotant (25) avec un tenon de palpage (28) qui forme le déclencheur (24) et qui fait saillie dans la zone supérieure de l'ouverture d'accueil (18), le levier pivotant (25) étant disposé latéralement à côté de l'élément de serrage (19) en forme de coque sphérique et venant en prise sur celui-ci.

2. Accouplement d'attelage selon la revendication 1, **caractérisé en ce que** l'organe de commande (9) est réalisé sous la forme d'un indicateur de la sécurité d'enclenchement (7) pouvant être actionné par le dispositif de blocage (23), le dispositif de blocage (23) bloquant ou libérant la position de fermeture (12) de l'organe de commande (9) en fonction de la position d'enclenchement.

3. Accouplement d'attelage selon la revendication 1 ou 2, **caractérisé en ce que** le dispositif de blocage (23) bloque l'organe de commande (9) si la position d'enclenchement n'est pas adoptée.

4. Accouplement d'attelage selon la revendication 1, 2 ou 3, **caractérisé en ce que** le mécanisme de fermeture (20) présente un élément de serrage (19) qui agit sur la tête sphérique (6) en position de fermeture, lequel est disposé et supporté séparément de l'organe de commande (9).

5. Accouplement d'attelage selon l'une des revendications précédentes, **caractérisé en ce que** le dispositif de blocage (23) présente un dispositif d'enclenchement (31) qui vient en prise par engagement géométrique sur l'organe de commande (9) et/ou le mécanisme de fermeture (20).

6. Accouplement d'attelage selon la revendication 5, **caractérisé en ce que** le dispositif d'enclenchement (31) présente des éléments d'enclenchement (32, 33) qui interagissent par engagement géométrique et sous la contrainte d'un ressort.

7. Accouplement d'attelage selon la revendication 5 ou 6, **caractérisé en ce que** le dispositif de blocage (23) présente le levier pivotant (25) avec le dispositif d'enclenchement (31).

8. Accouplement d'attelage selon l'une des revendications précédentes, **caractérisé en ce que** le tenon de palpage (28) est adapté au profil de la tête sphérique (6) dans la zone de contact.

9. Accouplement d'attelage selon l'une des revendications précédentes, **caractérisé en ce que** le boîtier d'accouplement (8) présente au niveau de l'ouverture d'accueil (18) un espace libre pour le tenon de palpage (28) en position d'enclenchement.

10. Accouplement d'attelage selon l'une des revendications précédentes, **caractérisé en ce que** le levier pivotant (25) est supporté de manière à pouvoir pivoter autour d'un palier fixe (26) dans le boîtier d'accouplement (8).

11. Accouplement d'attelage selon l'une des revendications précédentes, **caractérisé en ce que** le levier pivotant (25) présente un organe de rappel (34), de préférence un ressort.

12. Accouplement d'attelage selon la revendication 11, **caractérisé en ce que** l'organe de rappel (34) est relié avec l'organe de commande (9).

13. Accouplement d'attelage selon l'une des revendications précédentes, **caractérisé en ce que** le levier pivotant (25) est disposé sur le même axe que la coque sphérique (19) du mécanisme de fermeture (20).

14. Accouplement d'attelage selon l'une des revendications 5 à 13, **caractérisé en ce que** le dispositif d'enclenchement (31) présente une ouverture d'enclenchement (32) sur le levier pivotant (25) et une broche d'enclenchement (33) sur l'organe de commande (9).

15. Accouplement d'attelage selon la revendication 14, **caractérisé en ce que** l'ouverture d'enclenchement (32) est disposée sur l'extrémité arrière du levier.

16. Accouplement d'attelage selon l'une des revendications précédentes, **caractérisé en ce que** le levier pivotant (25) présente d'un côté pour la broche d'enclenchement (33) une came d'articulation (29) munie d'une bosse (30) avant l'ouverture d'enclenchement (32).

17. Accouplement d'attelage selon l'une des revendications 11 à 16, **caractérisé en ce que** l'organe de rappel (34) est relié avec la broche d'enclenchement (33) de l'organe de commande (9).

18. Accouplement d'attelage selon l'une des revendications 1 à 13, **caractérisé en ce que** dispositif d'enclenchement (31) présente une ouverture d'enclenchement (32) sur le levier pivotant (25) et une broche d'enclenchement (33) sur le mécanisme de fermeture (20).

19. Accouplement d'attelage selon la revendication 18, **caractérisé en ce que** le mécanisme de fermeture (20) présente un goujon coulissant (36) qui forme la broche d'enclenchement (33), guidé de manière mobile (38) dans le boîtier d'accouplement (8) et relié avec l'organe de commande (9).

20. Accouplement d'attelage selon la revendication 18, **caractérisé en ce que** le mécanisme de fermeture (20) présente un cliquet (46) supporté (47) de manière mobile dans le boîtier d'accouplement (8) et relié avec l'organe de commande (9), sur lequel est disposée la broche d'enclenchement (33).

21. Accouplement d'attelage selon l'une des revendications précédentes, **caractérisé en ce que** l'organe de commande (9) est réalisé sous la forme d'un levier de commande supporté (13) de manière à pouvoir pivoter dans le boîtier d'accouplement (8).

22. Accouplement d'attelage selon l'une des revendications précédentes, **caractérisé en ce que** l'organe de commande (9) présente un dispositif de verrouillage (17) à actionner lors de la commande.

23. Accouplement d'attelage selon l'une des revendications précédentes, **caractérisé en ce que** l'organe de commande (9) présente un indicateur d'usure (16).

24. Accouplement d'attelage selon l'une des revendications précédentes, **caractérisé en ce que** l'organe de commande (9) est réalisé sous la forme d'un levier d'accouplement (9') qui agit sur le mécanisme de fermeture (20).

25. Accouplement d'attelage selon l'une des revendications 1 à 20, **caractérisé en ce que** l'organe de commande (9) est réalisé sous la forme d'un levier de serrage (9") qui agit sur un accouplement à friction (43).

26. Accouplement d'attelage selon l'une des revendications précédentes, **caractérisé en ce que** l'accouplement d'attelage (5) présente une serrure (21) munie d'un verrou (22) qui vient en prise sur le dispositif de blocage (23), sur le mécanisme de fermeture (20) ou sur l'organe de commande (9).

27. Accouplement d'attelage selon la revendication 26, **caractérisé en ce que** la serrure (21) est disposée sur la paroi latérale du boîtier d'accouplement (8).
